# EUROPEAN PATENT SPECIFICATION

(11) **EP 3 789 191 B1**
(45) Date of publication and mention of the grant of the patent: **05.07.2023**
(21) Application number: 19382760.7
(22) Date of filing: 05.09.2019
(51) Int. Cl.: B29D 99/00, B29C 70/44, B29C 70/30

(54) **METHOD FOR MANUFACTURING A COMPOSITE MATERIAL STRUCTURE USING A COCURING PROCESS**
VERFAHREN ZUR HERSTELLUNG EINER VERBUNDMATERIALSTRUKTUR UNTER VERWENDUNG EINES COHÄRTUNGSVERFAHRENS
PROCÉDÉ DE FABRICATION D'UNE STRUCTURE DE MATÉRIAU COMPOSITE À L'AIDE D'UN PROCÉDÉ DE CO-DURCISSEMENT

(43) Date of publication of application: 10.03.2021
(73) Proprietor: Airbus Operations, S.L.U., 28906 Getafe (Madrid) (ES)
(72) Inventor: PÉREZ PASTOR, Augusto, 28906 Getafe, Madrid (ES); CHAMORRO ALONSO, Francisco Javier, 28906 Getafe, Madrid (ES); GARCÍA GARCÍA, Aquilino, 28906 Getafe, Madrid (ES); GALIANA BLANCO, Jorge Juan, 28906 Getafe, Madrid (ES); NOGUEROLES VIÑES, Pedro, 28906 Getafe, Madrid (ES)
(74) Representative: ABG Intellectual Property Law, S.L.

(56) References cited:
- EP-A1- 3 088 171
- WO-A1-2015/020675
- WO-A2-2011/003844

## Description

### TECHNICAL FIELD OF THE INVENTION

The present invention belongs to the field of manufacturing composite parts, and particularly, the invention provides a method for manufacturing a structure by curing together a base laminate and structural components placed thereon.

Accordingly, an object of the present invention is to provide at least one uncured structural component with a peripheral tapered foot edge so that the vacuum bag placed over follows all the uncured plies without an abrupt leap from the structural component foot to the base laminate.

In advantageous embodiments, a vacuum bag is formed by joining strips or bands that surround the structural components with complementary pieces of the same material resulting in a vacuum bag which extends over the entire uncured base laminate.

### BACKGROUND OF THE INVENTION

Structural components are normally used as stiffeners for adding rigidity and strength to adjacent load carrying panels or skin. An example of such structural components are 'T-profile' or 'Ω-profile' ('omega') stringers, which prevent the skin of an aircraft from buckling or bending under compression or shear loads. In addition, these structural (e.g. stiffening) components may transfer aerodynamic loads acting on the skin *-of the wing, fuselage section, etc.-* onto other supporting structure such as frames, beams, or ribs.

The resulting structure (stiffened panels or skin) is typically made of composite material by well-known co-bonding methods wherein these structural components (e.g. stringers) in uncured state (i.e. made of stacked 'pre-preg' plies) are joined to a skin or panels in cured state (i.e. already subjected to a curing cycle).

For example, a 'T-profile' stringer is conventionally formed by two halves in 'L-shape', which afterwards are joined together. Each halve may be the mirror image of the other and are positioned in such a way that both rest on each other making their respective webs in contact.

The resulting T-profile composite part is theoretically divided in a web (formed by respective webs of the 'L-shape' halves) and the two foot, wherein each feet points in an opposite direction. Once installed, the foot contact the skin or panels leaving the web projecting out the surface of the skin.

On the other hand, an 'omega-stringer' has a substantially trapezoidal profile with an open side, from the ends of which two feet extend outwards pointing in opposite directions (so-called stringer foot). The stringer is joined to the skin or panels via this foot. Alike the 'T-profile' stringer, the omega-stringers are normally co-bonded to a cured skin or panels.

US patent application 2016/03182382 discloses a co-bonding process used on stiffened lifting surfaces. In other words, the co-bonding methods entails two curing cycles, whether both composite parts are cured together and then adhesively bonded, or one part is firstly cured and the other part positioned and cured thereon as above patent document describes.

In the latter scenario of a typical co-bonding method, the first curing cycle is used to independently consolidate either the base laminate or the stringers. Then, the second curing cycle completes the mutual integration by curing and bonding the remainder part to the already cured one.

Although this two-curing step approach - *co-bonding method-* is a mature and reliable technology entailing a robust industrial solution, it is not cost-effective due to the extra labour (semi-finished parts rolling-over different stages) and energy consumption (autoclaves/ovens, raw materials, storing, etc.) associated to two curing cycles. Moreover, bonding requires the placement of an interposing adhesive film layer, along with a proper surface treatment (normally achieved by an additional pre-preg peel ply) to assure correct bonding to the pre-cured part.

Co-curing manufacturing methods, which involves curing together both uncured parts, reduces lead time up to reasonable levels. Nevertheless, this manufacturing method is exclusive of the simplest geometries, because of low quality achieve due to the difficulty to avoid prints and undulations in sites where geometry changes. This drawback is stressed in aeronautics, where prints or undulations creates weak areas which may affect the structural integrity.

For instance, to mould the stringer webs in uncured state it is necessary to use rigid caul plates. In particular, the areas where these rigid caul plates end, entail a high risk of creating undesirable wrinkles or undulations in co-curing methods. Consequently, the final stiffened panels or skin stress drops down significantly discarding this technology so far.

Thus, since manufacturing of structural components (e.g stringer manufacturing) is a mass-production, critical, labor-intensive, multi-step process that requires high quality or tight dimensional tolerances; nowadays, with co-bonding methods, the combination of a number of steps and the high precision required may cause delays prompting a drawback for the aeronautical industry.

Consequently, there is a need for reducing composite structure *-stiffened panels or skin-* lead times without jeopardizing structural quality of the final structure.

Finally, document WO 2015/020675 discloses a stiffened panel comprising a composite panel, and a stiffener including a base flange on the composite panel. The base flange is tapered towards the panel. The stiffened panel further comprises a composite overwrap layer on only the composite panel and a tapered surface of the base flange.

### SUMMARY OF THE INVENTION

The present invention provides a solution for the aforementioned problems by a method for manufacturing by co-curing a structure of composite material formed by at least one structural component positioned on a base laminate according to claim 1.

In a first inventive aspect, the invention provides a method for manufacturing a composite material structure using a co-curing process, the structure being formed by at least one structural component positioned on a base laminate, the method comprising the following steps:
a) for each uncured structural component, manufacturing it by laying-up and forming steps so that the structural component comprises a foot adapted to contact on the base laminate wherein such foot comprises a peripheral tapered edge; each uncured structural component being surrounded by a vacuum strip secured between curing tools;
b) positioning each of the at least one uncured structural component on an uncured base laminate in the areas foreseen for the attachment and forming a vacuum bag together with complementary pieces of the same material so that the resulting vacuum bag extends over the entire uncured base laminate;
c) applying a curing cycle to the assembly resulting from the previous step for curing together each of the at least one structural components with the base laminate, the composite material structure being manufacturing thereby.

It is to be noted that each uncured structural component is surrounded by a strip of vacuum bag in such a way that, once the structural component(s) is/are positioned, the resulting vacuum bag extending over the entire uncured base laminate may be formed by joining said strips with such complementary pieces of the same material. Otherwise, this vacuum bag may be provided as a single piece with an extension suitable for covering the whole uncured base laminate as well as all uncured structural components *-placed thereon-* envisaged (the vacuum strips and complementary pieces thereof being understood as delimited areas of the bigger single bag.

The base laminate is understood as a thin composite structural element that provides the outer surface of the structure. Typically, a number of composite plies (i.e. pre-preg) are laid-up one upon the other in a flat manner, thus resulting in a stack of plies.

If necessary, this stack of plies *-uncured base laminate-* may be trimmed to the desire shape. The resulting planar laminate (trimmed or not) is known as a composite pre-form.

Similarly, the manufacturing of uncured structural component(s) encompasses the laying-up of pre-preg plies and further includes a forming-up process so as to obtain the desired cross-sectional shape or profile of the structural component (e.g. a stringer).

For instance, if the structural component has a 'T-profile', two separate planar laminates, each corresponding to a single 'L-shape' halve, may be bended between the web and the foot in order to form-up two 'L-profiles'. Typical forming-up technologies for this process are hot forming and press-forming; wherein hot-forming uses a membrane and heat, whilst the press-forming uses a press and force. Then, both formed-up 'L-profiles' are positioned and put together making their respective webs contact symmetrically for achieving the desired 'T-profile'.

On the other hand, recent developments try to form the 'T-profile' in a single step. Be that as it may, once the forming step is completed, the manufacturing of the uncured structural component results in the uncured structural component being surrounded by a strip of vacuum bag secured between curing tools.

That is, there is an ensemble for each structural component wherein the laid-up and formed-up preform is wrapped, except for the base of the foot, by a vacuum strip arranged between such curing tools.

Nevertheless, unlike conventional structural component manufacturing where the foot edge is straight (i.e. the edge is perpendicular to the base laminate once positioned), the present disclosure provides the structural component foot with a peripheral tapered edge so that the vacuum bag can adhere to it as there is a progressive transition towards the base laminate avoiding sudden leaps which might suction beneath it (in the generated void).

Accordingly, once the vacuum bag is extended over such transition, there is no empty spaces causing suction of the base laminate (source of undulations creation) by the present invention. Therefore, this peripheral tapered shape (i.e. a ramp for the vacuum bag arrangement) prevents the creation of undulations on the skin laminate close to the structural component edge.

Thus, the invention provides a reliable manufacturing process using one single curing cycle for the integration of structural components with complex shape (stringers) on a base laminate already moulded on a tool (as the base laminate is also uncured) replicating the aero-shape of the external surface of a lifting surface part.

Furthermore, it provides the following advantages:
- reduction of labour, waste, energy consumption and manufacturing lead time as the composite structure is manufactured in one-shot;
- avoidance of adhesive bond failures;
- tight thickness tolerances; and

Preferably, the peripheral tapered foot edge is created during the bending step - *step (a)-* of the foot from the flat laminate by the sliding of the plies. Other advantageous embodiments will be described hereinafter.

For instance, in a particular embodiment, step (a) further comprises laying-up staggered pre-preg plies on the foot edge area to form the peripheral tapered foot edge. In other words, a special peripheral tapered foot edge geometry may be created during step (a) by laying up the pre-preg plies starting at different positions on the foot edge area.

In a preferred embodiment, step (a) further comprises trimming the peripheral foot edge of the at least one structural component to form the peripheral tapered foot edge.

Advantageously, this allows a readily, adaptably and easy to implement manufacturing process.

In a particular embodiment, the step (a) further comprises manufacturing separately the at least one structural component and joining adjacent to its peripheral foot edge an uncured wedge to form the peripheral tapered foot edge.

This uncured composite wedge may be similar to a rowing or composite filler. It is normally understood as a bundle of fibres which may be unidirectional and unspun or otherwise shaped into patterns to provide structural continuity and void avoidance.

This composite wedge may be manufactured independently, being afterward placed adjacent to the peripheral foot edge of the structural component. Without prejudice of the peripheral foot edge being either straight or tapered, the composite wedge compensates it to achieve a correct inclination.

Advantageously, it allows a simpler manufacturing tooling of the structural component thus enabling a reduction on the development lead time and with high capacity to adapt late design changes.

In a particular embodiment, the step (b) further comprises laying-up additional pre-preg plies in a non-planar manner covering at least the peripheral tapered foot edge so that the thresholds is offset.

By laying-up the pre-preg plies horizontally, it is produced a *staircase effect* due to the approximation of angles, which is compensate or offset by the additional pre-preg plies deposited over them. In other words, the staircase effect is the result of the approximation of surfaces at an angle by the pre-preg ply thickness as the height of a step during manufacturing.

A collateral advantage of this embodiment is that the mechanical properties of the foot edge are also improved in Z-direction, i.e. substantially perpendicular to the base laminate.

In a preferred embodiment, the step (b) further comprises laying-up the uncured base laminate on a mould shaping an aerodynamic surface, so that the base laminate is preferably a portion of an aircraft skin.

As they are laid-up over a depositing mould shaping an aerodynamic surface, the uncured base laminate comprises a lower aerodynamic face-sheet built by successive plies.

The structural components, if more than one, are all positioned on the opposite face to the aerodynamic face-sheet.

In a particular embodiment, at least one structural component is a reinforcing longitudinal stringer such as a T-profile stringer or an omega-profile stringer.

As mentioned, an omega-profile stringer is a common semi-tubular stiffening component or stringer in aeronautics.

Regarding the omega-profile stringer, the curing tool may be either a male tool (also known as 'mandrel' such as barrel-type), a female tool, or both.

In a particular embodiment, if the reinforcing longitudinal stringer is a T-profile stringer, the curing tools are two angular profiles adapted to a shape the T-profile stringer. In a preferred embodiment, these two angular profiles are two L-profile caul plates.

The specific angle depends on the angle finally form between the web and foot of the 'T-profile' stringer.

In a particular embodiment, the curing tools are made of a material able to maintain a stable shape at the solidification temperatures of the composite matrix, such as steel or INVAR alloy.

For instance, the composite matrix may be a thermoplastic or thermosetting polymer such as epoxy resin.

In a particular embodiment, the vacuum strips and the complementary pieces for forming jointly a vacuum bag comprise an impervious plastic film. The internal side of the impervious plastic film, that is, the one facing the composite part, may be either treated with a release agent or covered by a release film.

The impervious plastic film is the outer vacuum bag from which the air is evacuated by the pump. This film is tear resistant and sticks well to a bag sealing tape.

The release film is a plastic film configured not to stick to the composite laminate. Further, the release film may have a matte finish to improve the superficial appearance.

In a preferred embodiment, a breather tissue is arranged between the impervious plastic film and the release film. A breather tissue is a type of porous fabric promoting movement of gases inside the vacuum bag.

In a particular embodiment, at least one complementary piece comprises a first portion of the same width as the vacuum strips, and a second portion adapted to cover the remainder region of the base laminate (2).

Advantageously, this allows reducing manufacturing costs.

In a particular embodiment, both the at least one vacuum strip and said first portion of the at least one complementary piece comprises sealing tapes applied at any or both of the respective side edges thereof; so that contiguous strips and first portions of the complementary pieces are in contact by the sealing tapes in order to facilitate the union between the vacuum strip and the first portion of a complementary piece.

The bag sealing tape is an especially sticky, gum-like tape for perfectly sealing two edges of a vacuum bag or between the vacuum bag and a mould.

In a particular embodiment, in step (a) lateral edges of the vacuum strips are fixed to the curing tools in order to ensure proper alignment of the vacuum strips during the placement of the uncured structural component on the base laminate.

In a second aspect, the disclosure provides a structure of composite material formed by at least one structural component positioned on a base laminate manufactured by the method according to any of the embodiments of the first inventive aspect.

In short, the most remarkable feature of the composite structure formed by the method according to the invention is the presence of a peripheral tapered foot edge of the at least one structural component as well as the avoidance of undulations on the base laminate close to such foot edge.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic plan view of a composite structure (stiffened skin) formed by a base laminate (an aircraft wing cover) on which a plurality of structural components (stringers) are positioned.
- Figure 2: This figure shows a schematic cross-sectional representation of a conventional stringer foot edge cured together with a base laminate (conventionally co-cured).
- Figures 3a-3b: These figures show (a) a 'T-profile' stringer, and (b) an 'omega-profile' stringer placed on a base laminate.
- Figures 4a-4c: These figures show an embodiment of a structural component and two detailed views of different peripheral tapered foot edges.
- Figures 5a-5b: These figures shows (a) a schematic plan view of the composite structure before subjecting it to the curing cycle illustrating in particular the strips and complementary pieces with which the vacuum bag is formed; and (b) a partial side view of an embodiment of the strip and complementary piece.

### DETAILED DESCRIPTION OF THE INVENTION

The skilled person in the art recognizes that aspects of the present invention described hereinafter may be embodied either as a method for manufacturing by co-curing a composite structure (10), or the composite material structure (10) itself.

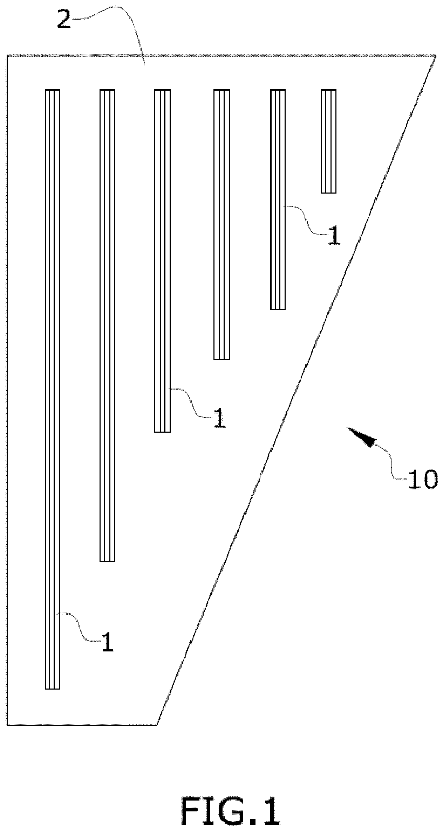

A manufacturing method of a structure (10) such as a cover of an aircraft wing (see figure 1) formed by a skin of composite (i.e. the base laminate (2)) stiffened by T-profile stringers made of composite (i.e. the structural components (1)) will now be described.

In aeronautics, structural components (1) are typically placed span-wise the wing.

Such method comprises the basic following steps:
a) for each uncured structural component (1), manufacturing it by laying-up and forming steps so that the structural component (1) comprises a foot (1.1) adapted to contact on a base laminate (2) wherein such foot (1.1) comprises a peripheral tapered edge (1.1.1); each uncured structural component (1) being surrounded by a strip (3) of vacuum bag secured between curing tools (not shown in these figures);
b) positioning each of the at least one uncured structural component (1) on an uncured base laminate (2) in the areas foreseen for the attachment, the vacuum strip (3) of each uncured structural component (1) forming a vacuum bag with complementary pieces (4.1, 4.2) of the same material so that the resulting vacuum bag extends over the entire uncured base laminate (2);
c) applying a curing cycle to the assembly resulting from the previous step for curing together each of the at least one structural components (1) with the base laminate (2), manufacturing the structure (10) thereby.

In particular, the uncured structural component (1) is manufactured by laying up pre-preg plies on a flat laminate, followed by a forming process where the web or the foot bends to the shape of the desired profile.

The forming process can be achieved either by a conventional diaphragm vacuum forming, by dedicated tooling where the laminate is enclosed heated and moved in a controlled way or by continuous forming methods.

As mentioned, the tapered foot edge may be achieved either by the forming process (if the foot bends from the flat laminate), by a special lay-up arrangement where each ply starts in a different position ('staggered') or by trimming the laminate foot edge with an appropriate angle.

Then, the manufactured structural component (1) still uncured and wrapped by the vacuum strip (3) (and secured between curing tools) is positioned on the uncured base laminate (2) (already moulded on a mould shaping the outer aerodynamic surface). Positioning of the structural components (1) *-stringers-* may be performed one by one or in groups, using dedicated handling and positioning tools which are properly referenced, for instance to the base laminate or base tool.

It can be noted that the sum of an uncured structural component (1) surrounded by the vacuum strip (3), except on the foot, and in turn secured between curing tools is known as 'ensemble'.

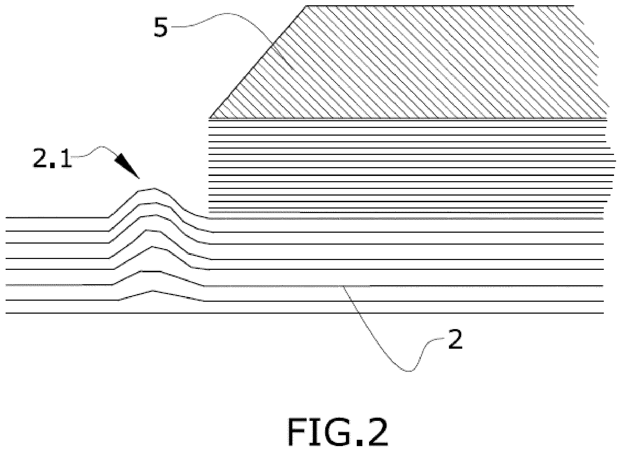

Figure 2 depicts a schematic cross-sectional representation of a conventional -straight- stringer foot edge co-cured with a base laminate (2). It can be seen that the foot edge is formed by the edges of the stacked plies originally forming the uncured preform. These plies are compressed by a stringer moulding tool (5) that keeps them in position.

The curing tool (5) function is primary preventing the deviation of the web (1.2) from the vertical plane and aiding the vacuum bag matching, as closely as possible, to the radius of the structural component. In some embodiments, especially with 'T-profile' stringers, curing tool (5) does not cover the top of the web (1.2).

Applying one single curing cycle for the integration of the stringers (1) shown in figure 2 with the base laminate (2) (i.e. co-curing) causes prints and undulations (2.1) on the skin (2) once cured, particularly in areas where the stringer moulding tool (5) ends close to the peripheral stringer foot edge.

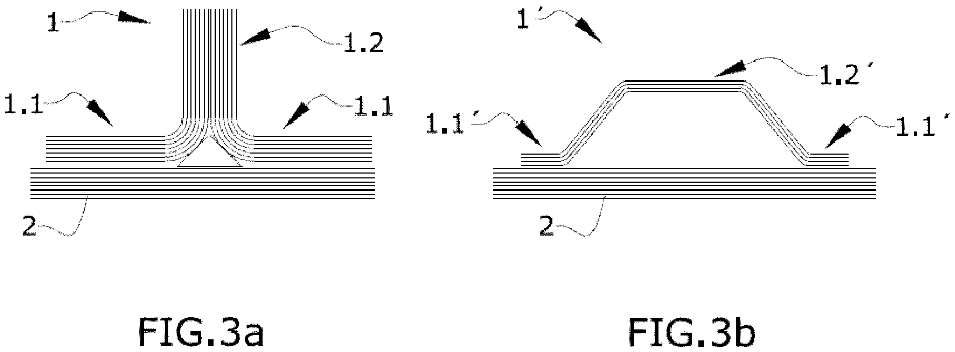

Figures 3a and 3b depicts two stringers (1, 1') with a different cross-sectional profile commonly used in aeronautics. Particularly, figure 3a shows a 'T-profile' stringer (1), while figure 3b shows an 'omega-profile' stringer (1'), both placed on a base laminate (2).

The 'T-profile' stringer (1) (see figure 3a) formed by stacked plies comprises:
a web (1.2), projecting perpendicular to the base laminate (2); and
two foot (1.1), each pointing in opposite direction, serving as resting for the 'T-profile' stringer on the base laminate (2).

Once installed, the foot (1.1) has a surface adapted to contact the base laminate (2) which extends up to the peripheral foot edge.

Regarding the 'omega-profile' stringer (1') (see figure 3b), it is formed by a substantially trapezoidal profile with an open side, from the ends of which two feet (1.1') extend outwards pointing in opposite directions. The isosceles trapezoidal profile may be understood as the web (1.2') of the 'omega-profile' stringer (1').

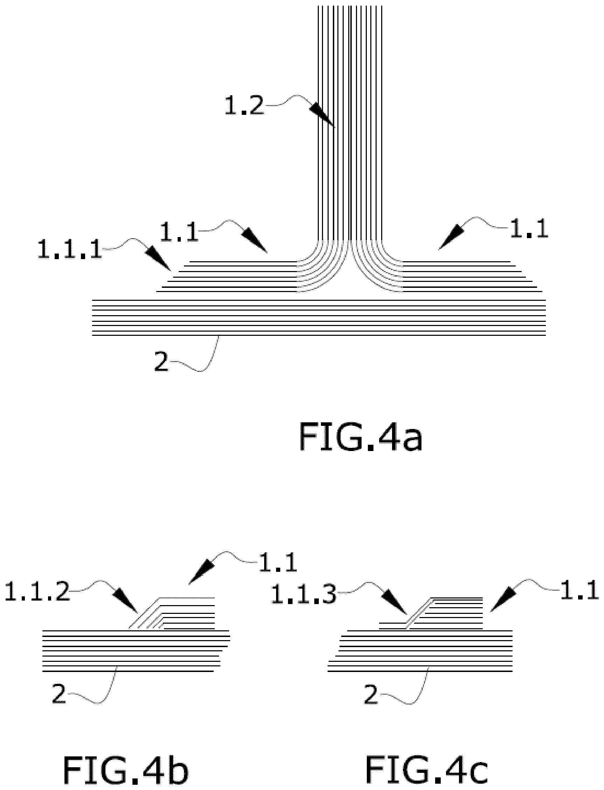

Figure 4a depicts a structural component (1) placed on a base laminate (2). In particular, it is shown a 'T-profile' stringer (1) with a peripheral tapered foot edge (1.1.1).

For exemplary purposes, only a 'T-profile' stringer (1) will be depicted, but it is also applicable to the peripheral tapered foot edge of an 'omega-profile' stringer (1') as shown in figure 3b.

As mentioned, this tapered or chamfered edge shape creates a smooth transition for the vacuum bag (4.1, 4.2) and prevents bridging and sinking of these edges on the base laminate (2). Thus, the undesirable effect (2.1) shown in figure 2 is avoided along the peripheral foot edge, which represented a weakness on the performance of the co-cured structure. Unlike that, the co-cured stiffened panels (10) as the one shown in figure 4a meet the quality levels acceptable in the aircraft industry.

Figure 4b depicts a tapered edge (1.1.1) achieved either by laying up the foot edge creating this staircase pattern or by a trimming operation with an appropriate angle.

This staircase pattern created on the foot edge by following a staggered laying-up scheme may be performed either by leaving the longest plies close to the base laminate once positioned thereon; or in an inverted staggering (i.e. the shortest plies close to the base laminate) and performing a compaction on the foot edge to form the peripheral tapered foot edge (1.1.1). That is, bringing the longest plies to the base laminate by the compaction to form a ramp.

Alternatively, the peripheral tapered foot edge (1.1.1) is formed by an uncured wedge (1.1.2) positioned adjacent to a straight peripheral foot edge of a stringer (1).

Further, figure 4c depicts additional plies (1.1.3) laid-up so as to cover the peripheral foot edge of the stringer (1).

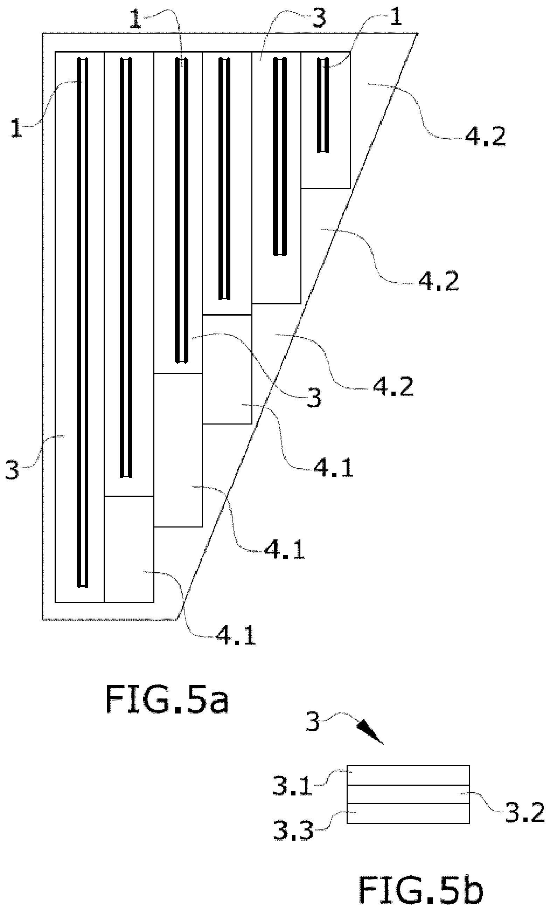

Figure 5a depicts a schematic plan view of the composite structure (10) before subjecting it to the curing cycle.

In some embodiments, the lateral edges of the vacuum strips (3) are fixed to an assembly tool where the curing tools are located. To do so, a strip (3) is firstly placed on the curing tool and fixed to said assembly tool. Then, in a second step, such preform is placed within the strip (3), being surrounded thereby. It is to be noted that the beneath surface of the foot of the stringer (the one to be in contact with the base laminate) is not surrounded by this vacuum strip (3).

By keeping the lateral edges of the strip fixed to the assembly tool during placement of the uncured structural component (1) on the base laminate (2), the alignment of the strip (3) with the web (1.2) of the structural component (1) is guaranteed.

It is to be noted that strips (3) are adapted to the geometry of the uncured structural components (1) so as to avoid the so-called 'bridges' that may cause breakage of the vacuum bag during the curing cycle.

Upon positioning of the ensembles on the base laminate (2) (both in uncured state), the vacuum bag is formed for the whole assembly by joining the vacuum bag strips (3) provided with each structural component (1) (within each ensemble) with the complementary pieces (4.1, 4.2) in order to cover the whole base laminate (2) extension.

As it can be seen, the complementary piece(s) comprise(s) a first portion (4.1) of the same width as the vacuum strips (3), and a second portion (4.2) adapted to cover edge region of the base laminate (2).

The first portion (4.1) of the complementary pieces is deemed as continuation of the vacuum strips (3) of those structural components (1) that do not extend to the entire available length of the base laminate (2); and the second portion (4.2) thereof are deemed as supplementary pieces required to complete the vacuum bag covering all the base laminate (2) extension.

The vacuum strip(s) (3) as well as the first portion (4.1) of the complementary piece(s) may comprise sealing tapes (not shown) at any or both side edges.

Therefore, after placing the structural components (1) on the base laminate (2), the vacuum bag is formed joining the strips (3) and the first (4.1) (and second (4.2)) portions of the complementary pieces for each structural component (1) by their contiguous side edges by means of such sealing tapes.

Figure 5b depicts a partial side view of the strip (3) (or complementary piece (4.1, 4.2)).

In particular, the vacuum strips (3) and the complementary pieces (4.1, 4.2) for forming a vacuum bag comprise an impervious plastic film (3.1) with the internal side treated with a release agent or covered by a release film (3.3), A breather tissue (3.2) can be arranged between these two films to improve vacuum stability during laminate consolidation.

## Claims

1. A method for manufacturing a composite material structure (10) using a co-curing process, the structure (10) being formed by at least one structural component (1) positioned on a base laminate (2), the method comprising the following steps:
a) for each uncured structural component (1), manufacturing it by laying-up and forming steps so that the structural component (1) comprises a foot (1.1) adapted to contact on the base laminate (2) wherein such foot (1.1) comprises a peripheral tapered foot edge (1.1.1); each uncured structural component (1) being surrounded by a vacuum strip (3) secured between curing tools;
b) positioning each of the at least one uncured structural component (1) on an uncured base laminate (2) in the areas foreseen for the attachment, the vacuum strip (3) of each uncured structural component (1) forming a vacuum bag with complementary pieces (4.1, 4.2) of the same material so that the resulting vacuum bag extends over the entire uncured base laminate (2);
c) applying a curing cycle to the assembly resulting from the previous step for curing together each of the at least one structural components (1) with the base laminate (2), manufacturing the composite material structure (10) thereby.

2. The method according to claim 1, wherein step (a) further comprises laying-up staggered pre-preg plies on the foot edge area to form the peripheral tapered foot edge (1.1.1).

3. The method according to any of claims 1 or 2, wherein step (a) further comprises trimming a peripheral foot edge of the at least one structural component (1) to form the peripheral tapered foot edge (1.1.1).

4. The method according to any of claims 1 to 3, wherein step (a) further comprises manufacturing separately the at least one structural component (1) and joining adjacent to its peripheral foot edge an uncured wedge (1.1.2) to form the peripheral tapered foot edge (1.1.1).

5. The method according to any of claims 1 to 4, wherein step (b) further comprises laying-up additional pre-preg plies (1.1.3) in a non-planar manner covering at least the peripheral tapered foot edge (1.1.1) so that the thresholds are offset.

6. The method according to any of claims 1 to 5, wherein step (b) further comprises laying-up the uncured base laminate (2) on a mould shaping an aerodynamic surface, so that the base laminate (2) is preferably a portion of an aircraft skin.

7. The method according to any of claims 1 to 6, wherein at least one structural component (1) is a reinforcing longitudinal stringer such as a T-profile stringer or an omega-profile stringer.

8. The method according to claim 7, when the reinforcing longitudinal stringer (1) is a T-profile stringer, wherein the curing tools are two angular profiles, preferably two L-profile caul plates, adapted to a shape the T-profile stringer.

9. The method according to any of claims 1 to 8, wherein the curing tools are made of a material able to maintain a stable shape at the solidification temperatures of the composite matrix, such as steel or INVAR alloy.

10. The method according to any of claims 1 to 9, wherein the vacuum strips (3) and the complementary pieces (4.1, 4.2) for forming jointly a vacuum bag comprise an impervious plastic film (3.1) with the internal side either treated with a release agent or covered by a release film (3.3).

11. The method according to claim 10, wherein a breather tissue (3.2) is arranged between the impervious plastic film (3.1) and the release film (3.3).

12. The method according to any of claims 1 to 11, wherein at least one complementary piece (4.1, 4.2) comprises a first portion (4.1) of the same width as a vacuum strip (3), and a second portion (4.2) adapted to cover the remainder region of the base laminate (2).

13. The method according to claim 10, wherein both the at least one vacuum strip (3) and said first portion (4.1) of the at least one complementary piece comprises sealing tapes applied at any or both of the respective side edges thereof; so that contiguous strips (3) and/or first portions (4.1) of the complementary pieces are in contact by the sealing tapes in order to facilitate the union between the vacuum strip (3) and the first portion (4.1) of a complementary piece.

14. The method according to any of claims 1 to 13, wherein in step (a) lateral edges of the vacuum strips (3) are fixed to an assembly tool where the curing tools are placed, in order to ensure proper alignment of the vacuum strips (3) during the placement of the uncured structural component (1) on the base laminate (2).

## Patentansprüche

1. Verfahren zum Herstellen einer Verbundmaterialstruktur (10) unter Verwendung eines Cohärtungsverfahrens, wobei die Struktur (10) durch mindestens eine strukturelle Komponente (1) ausgebildet ist, die auf einem Basislaminat (2) positioniert ist, das Verfahren die folgenden Schritte umfassend:
a) für jede nicht ausgehärtete strukturelle Komponente (1), Herstellen davon durch Auflege- und Ausbildungsschritte, so dass die strukturelle Komponente (1) einen Sockel (1.1) umfasst, der eingerichtet ist, um auf dem Basislaminat (2) zu kontaktieren, wobei ein derartiger Sockel (1.1) einen peripheren konisch zulaufenden Sockelrand (1.1.1) umfasst; wobei jede nicht ausgehärtete strukturelle Komponente (1) von einem Vakuumstreifen (3) umgeben ist, der zwischen Härtungswerkzeugen befestigt ist;
b) Positionieren jeder der mindestens einen nicht ausgehärteten strukturellen Komponente (1) auf einem nicht ausgehärteten Basislaminat (2) in den für die Befestigung vorgesehenen Bereichen, wobei der Vakuumstreifen (3) jeder nicht ausgehärteten strukturellen Komponente (1) eine Vakuumtasche mit komplementären Stücken (4.1, 4.2) des gleichen Materials ausbildet, so dass sich die resultierende Vakuumtasche über das gesamte nicht ausgehärtete Basislaminat (2) erstreckt;
c) Anwenden eines Härtungszyklus auf die Anordnung, die aus dem vorhergehenden Schritt resultiert, zum Zusammenhärten jeder der mindestens einen strukturellen Komponente (1) mit dem Basislaminat (2), dadurch Herstellen der Verbundmaterialstruktur (10).

2. Verfahren nach Anspruch 1, wobei Schritt (a) weiterhin Auflegen gestaffelter vorimprägnierter Lagen auf dem Sockelrandbereich umfasst, um den peripheren konisch zulaufenden Sockelrand (1.1.1) auszubilden.

3. Verfahren nach einem der Ansprüche 1 oder 2, wobei Schritt (a) weiterhin Beschneiden eines peripheren Sockelrands der mindestens einen strukturellen Komponente (1) umfasst, um den peripheren konisch zulaufenden Sockelrand (1.1.1) auszubilden.

4. Verfahren nach einem der Ansprüche 1 bis 3, wobei Schritt (a) weiterhin getrenntes Herstellen der mindestens einen strukturellen Komponente (1) und Verbinden an ihrem peripheren Sockelrand angrenzend eines nicht ausgehärteten Keils (1.1.2) umfasst, um den peripheren konisch zulaufenden Sockelrand (1.1.1) auszubilden.

5. Verfahren nach einem der Ansprüche 1 bis 4, wobei Schritt (b) weiterhin Auflegen zusätzlicher vorimprägnierter Lagen (1.1.3) in einer nichtplanaren Weise umfasst, die mindestens den peripheren konisch zulaufenden Sockelrand (1.1.1) bedecken, so dass die Schwellen versetzt sind.

6. Verfahren nach einem der Ansprüche 1 bis 5, wobei Schritt (b) weiterhin Auflegen des nicht ausgehärteten Basislaminats (2) auf einer Form umfasst, die eine aerodynamische Oberfläche formt, so dass das Basislaminat (2) vorzugsweise ein Abschnitt einer Flugzeughaut ist.

7. Verfahren nach einem der Ansprüche 1 bis 6, wobei mindestens eine strukturelle Komponente (1) ein verstärkender longitudinaler Stringer ist, wie beispielsweise ein Stringer mit T-Profil oder ein Stringer mit Omega-Profil.

8. Verfahren nach Anspruch 7, wobei, wenn der verstärkende longitudinale Stringer (1) ein Stringer mit T-Profil ist, die Härtungswerkzeuge zwei Winkelprofile sind, vorzugsweise zwei Druckausgleichplatten mit L-Profil, die eingerichtet sind, um den Stringer mit T-Profil zu formen.

9. Verfahren nach einem der Ansprüche 1 bis 8, wobei die Härtungswerkzeuge aus einem Material angefertigt sind, das in der Lage ist, eine stabile Form bei den Verfestigungstemperaturen der Verbundstoffmatrix zu erhalten, wie beispielsweise Stahl oder INVAR-Legierung.

10. Verfahren nach einem der Ansprüche 1 bis 9, wobei die Vakuumstreifen (3) und die komplementären Stücke (4.1, 4.2) zum gemeinsamen Ausbilden einer Vakuumtasche einen undurchlässigen Kunststofffilm (3.1) umfassen, wobei die Innenseite entweder mit einem Trennmittel behandelt ist oder mit einer Trennfolie (3.3) bedeckt ist.

11. Verfahren nach Anspruch 10, wobei ein Druckausgleichsgewebe (3.2) zwischen dem undurchlässigen Kunststofffilm (3.1) und der Trennfolie (3.3) angeordnet ist.

12. Verfahren nach einem der Ansprüche 1 bis 11, wobei mindestens ein komplementäres Stück (4.1, 4.2) einen ersten Abschnitt (4.1) der gleichen Breite wie ein Vakuumstreifen (3) umfasst und ein zweiter Abschnitt (4.2) eingerichtet ist, um den restlichen Bereich des Basislaminats (2) zu bedecken.

13. Verfahren nach Anspruch 10, wobei sowohl der mindestens eine Vakuumstreifen (3) als auch der erste Abschnitt (4.1) des mindestens einen komplementären Stücks Dichtungsbänder umfasst, die auf einem beliebigen oder auf beiden der jeweiligen Seitenränder davon aufgebracht sind; so dass zusammenhängende Streifen (3) und/oder erste Abschnitte (4.1) der komplementären Stücke durch die Dichtungsbänder in Kontakt sind, um die Vereinigung zwischen dem Vakuumstreifen (3) und dem ersten Abschnitt (4.1) eines komplementären Stücks zu unterstützen.

14. Verfahren nach einem der Ansprüche 1 bis 13, wobei in Schritt (a) laterale Ränder der Vakuumstreifen (3) an einem Montagewerkzeug befestigt sind, wo die Härtungswerkzeuge angeordnet sind, um eine passende Ausrichtung der Vakuumstreifen (3) während der Platzierung der nicht ausgehärteten strukturellen Komponente (1) auf dem Basislaminat (2) zu gewährleisten.

## Revendications

1. Procédé de fabrication d'une structure en matériau composite (10) au moyen d'un traitement de co-durcissement, la structure (10) étant formée par au moins un composant structural (1) positionné sur un stratifié de base (2), le procédé comprenant les étapes suivantes :
a) pour chaque composant structural non durci (1), sa fabrication par des étapes d'accumulation de couches et façonnage de telle sorte que le composant structural (1) comprenne un pied (1.1) adapté pour être en contact sur le stratifié de base (2), un tel pied (1.1) comprenant un bord périphérique de pied effilé (1.1.1), chaque composant structural non durci (1) étant entouré par une bande à vide (3) fixée entre des outils de durcissement ;
b) positionnement de chacun de l'au moins un composant structural non durci (1) sur un stratifié de base non durci (2) dans les zones prévues pour la fixation, la bande à vide (3) de chaque composant structural non durci (1) formant une poche à vide avec des pièces complémentaires (4.1, 4.2) du même matériau de telle sorte que la poche à vide résultante s'étend sur la totalité du stratifié de base non durci (2) ;
c) application d'un cycle de durcissement à l'assemblage résultant de l'étape précédente pour le durcissement conjoint de chacun de l'au moins un composant structural (1) avec le stratifié de base (2), et ainsi fabrication de la structure en matériau composite (10).

2. Procédé selon la revendication 1, dans lequel l'étape (a) comprend en outre l'accumulation de couches de préimprégné en quinconce sur la zone de bord de pied pour former le bord périphérique de pied effilé (1.1.1).

3. Procédé selon l'une quelconque des revendications 1 et 2, dans lequel l'étape (a) comprend en outre le rognage d'un bord périphérique de pied de l'au moins un composant structural (1) pour former le bord périphérique de pied effilé (1.1.1).

4. Procédé selon l'une quelconque des revendications 1 à 3, dans lequel l'étape (a) comprend en outre la fabrication séparée de l'au moins un composant structural (1) et l'assemblage au voisinage de son bord périphérique de pied d'un coin non durci (1.1.2) pour former le bord périphérique de pied effilé (1.1.1).

5. Procédé selon l'une quelconque des revendications 1 à 4, dans lequel l'étape (b) comprend en outre l'accumulation de couches de préimprégné supplémentaires (1.1.3) de manière non plane recouvrant au moins le bord périphérique de pied effilé (1.1.1) de telle sorte que les niveaux soient décalés.

6. Procédé selon l'une quelconque des revendications 1 à 5, dans lequel l'étape (b) comprend en outre l'accumulation de couches du stratifié de base non durci (2) sur un moule façonnant une surface aérodynamique, de telle sorte que le stratifié de base (2) soit de préférence une partie d'un revêtement d'aéronef.

7. Procédé selon l'une quelconque des revendications 1 à 6, dans lequel au moins un composant structural (1) est un longeron longitudinal de renforcement tel qu'un longeron à profil en T ou un longeron à profil en oméga.

8. Procédé selon la revendication 7, quand le longeron longitudinal de renforcement (1) est un longeron à profil en T, dans lequel les outils de durcissement sont deux profilés angulaires, de préférence deux plaques de compression à profil en L, adaptées à une forme du longeron à profil en T.

9. Procédé selon l'une quelconque des revendications 1 à 8, dans lequel les outils de durcissement sont constitués d'un matériau pouvant conserver une forme stable aux températures de solidification de la matrice composite, tel que l'acier ou l'alliage INVAR.

10. Procédé selon l'une quelconque des revendications 1 à 9, dans lequel les bandes à vide (3) et les pièces complémentaires (4.1, 4.2) destinées à former ensemble une poche à vide comprennent un film plastique imperméable (3.1) avec le côté interne traité avec un agent antiadhérent ou recouvert d'un film détachable (3.3).

11. Procédé selon la revendication 10, dans lequel un tissu respirant (3.2) est disposé entre le film plastique imperméable (3.1) et le film détachable (3.3).

12. Procédé selon l'une quelconque des revendications 1 à 11, dans lequel au moins une pièce complémentaire (4.1, 4.2) comprend une première partie (4.1) de la même largeur qu'une bande à vide (3), et une deuxième partie (4.2) adaptée pour recouvrir la région restante du stratifié de base (2).

13. Procédé selon la revendication 10, dans lequel l'au moins une bande à vide (3) et ladite première partie (4.1) de l'au moins une pièce complémentaire comprennent toutes deux des rubans d'étanchéité appliqués sur n'importe lequel des bords latéraux respectifs de celles-ci ou les deux, de telle sorte que des bandes (3) et/ou premières parties (4.1) des pièces complémentaires contiguës sont en contact avec les rubans d'étanchéité afin de faciliter la jonction entre la bande à vide (3) et la première partie (4.1) d'une pièce complémentaire.

14. Procédé selon l'une quelconque des revendications 1 à 13, dans lequel, à l'étape (a), des bords latéraux des bandes à vide (3) sont fixés à un outil d'assemblage où sont placés les outils de durcissement, afin d'assurer le bon alignement des bandes à vide (3) pendant la mise en place du composant structural non durci (1) sur le stratifié de base (2).
